# EUROPEAN PATENT APPLICATION

(11) **EP 2 605 455 A1**
(43) Date of publication of application: **19.06.2013**
(21) Application number: 10855830.5
(22) Date of filing: 22.12.2010
(51) Int. Cl.: H04L 12/28, G05B 19/418, G08B 25/10

(54) **METHOD AND APPARATUS FOR PREVENTING ILLEGAL ENCROACHMENT IN INTERNAL NETWORK OF INTELLIGENT HOME**

(30) Priority: 13.08.2010 CN 201010253950
(71) Applicant: ZTE Corporation, Shenzhen, Guangdong 518057 (CN)
(72) Inventor: WAN, Bangrui, Shenzhen Guangdong 518057 (CN); YU, Hongyu, Shenzhen Guangdong 518057 (CN); ZHOU, Hongji, Shenzhen Guangdong 518057 (CN)
(74) Representative: Reboussin, Yohann Mickaël Noël
(86) International application number: PCT/CN2010/080117
(87) International publication number: WO 2012/019410

(57) **Abstract**

A method and an apparatus for preventing an illegal intrusion in an internal network of a smart home are provided in the disclosure. Wherein the method includes the following steps: a control centre receives an access request forwarded by a smart home gateway (101); the control centre detects the access request according to pre-stored access control strategies to obtain a detection result (102); when the detection result is passed, the control centre transmits a control instruction included in the access request to a corresponding terminal through the gateway, otherwise refuses the access request (103). The internal network of the smart home in the disclosure can prevent a vicious and illegal access and ensure the security of the internal network of the smart home.

## Description

### TECHNICAL FIELD

The disclosure relates to the technical field of the security of the Internet of things, particularly to a method and an apparatus for preventing an illegal intrusion in an internal network of a smart home.

### BACKGROUND

Based on housing, a smart home is an efficient, comfortable, safe, convenient and environment-friendly living environment which acts as a building provided with information household electric appliances, equipment automation and sensor networks and integrates the functions as a system and a structure, as well as service and management functions.

The ubiquitous network-based smart home is accessed to an external network through various wireless and wire access methods, and an internal home network is formed by wireless and wire access methods and the like of a gateway. The external network and the internal network constitute the smart home service ubiquitous network foundation.

The internal networking of the smart home is an internal local area network formed by connecting various internal terminal devices of the smart home to the gateway through wireless and wire access methods and the like. A control centre in the internal networking is not connected with any external networks and is only connected to the gateway through which various instructions are transmitted to control various terminals in the internal network. An operating support platform and a service gateway are accessed to the gateway via an external network.

Various internal terminal devices of the smart home can be divided into two types of control terminals: local control terminals and remote control terminals. The local control terminal is connected to the gateway, and configured to receive a control instruction of a user and send the control instruction to the control centre via the gateway. The remote control terminal starts an application to send an instruction, and the control instruction sent from the remote control terminal of the user is received by the operating support platform and forwarded to the control centre via the service gateway and the gateway.

In existing systems, various illegal users may access the gateway through external networks (e.g., the Internet, cable television networks, mobile networks and the like) to access and control various terminals via the control centre. Therefore the terminals may be used illegally due to the disadvantages of a safety protection strategy of the control centre.

### SUMMARY

In view of this, the technical problem to be solved by the disclosure is to provide a method and an apparatus for preventing an illegal intrusion in an internal network of a smart home, so as to prevent a vicious and illegal access and ensure the security of the internal network of the smart home.

To solve the technical problems above, the technical solution of the disclosure is realized as follows.

A method for preventing an illegal intrusion in an internal network of a smart home includes: receiving, by a control centre, an access request forwarded by a gateway; detecting, by the control centre, the access request according to pre-stored access control strategies to obtain a detection result; and when the detection result is passed, transmitting, by the control centre, a control instruction included in the access request to a corresponding terminal through the gateway; otherwise, refusing the access request.

The method may further include: before receiving an access request forwarded by a gateway, obtaining, by the control centre, a user requirement and configuring an access control strategy according to the user requirement.

The method may further include: before detecting the access request, judging, by the control centre, whether the control instruction included in the access request is in a pre-stored control instruction list; if so, transmitting the control instruction included in the access request to a corresponding terminal; otherwise, performing a step of detecting the access request.

The method may further include: before detecting the access request according to pre-stored access control strategies, obtaining, by the control centre, a strategy selection parameter, and determining according to the strategy selection parameter a current access control strategy used in access control from the pre-stored access control strategies; the detecting the access request may specifically comprise: detecting, by the control centre, the access request according to the current access control strategy used in access control to obtain a detection result.

The access control strategy may be related to at least one of: access history record data of a communication object corresponding to an access request, and information included in a current access request.

The method may further include: in access requests sent from a first source address, when the number of access requests failing to pass the detection within a predetermined period of time exceeds a predetermined threshold, sending, by the control centre, the first source address to the gateway, and refusing, by the gateway, access requests sent from the first source address.

The method may further include: in access requests whose target address is a target address of a first terminal, when the number of the access requests failing to pass the detection within a predetermined period of time exceeds a predetermined threshold, storing, by the control centre, the address of the first terminal to refuse all access requests whose target address is the address of the first terminal.

An apparatus for preventing an illegal intrusion in an internal network of a smart home includes:
a storing module, which is configured to store access control strategies;
a receiving module, which is configured to receive an access request forwarded by a gateway;
a detecting module, which is configured to detect the access request according to the access control strategies to obtain a detection result; and
a processing module, which is configured to, when the detection result is passed, transmit a control instruction included in the access request to a corresponding terminal through the gateway, otherwise to refuse the access request.

The apparatus may further include: a strategy configuring module, which is configured to configure an access control strategy according to a user requirement.

The apparatus may further include: preferably, the storing module may be configured to store a control instruction list, a pre-judging module, which is configured to judge whether the control instruction included in the access request is in the control instruction list to obtain a judgment result; and a forwarding module, which is configured to, when the judgment result indicates that the control instruction is in the control instruction list, transmit the control instruction included in the access request to a corresponding terminal, otherwise to trigger the detecting module.

The apparatus may further include: a parameter obtaining module, which is configured to obtain a strategy selection parameter, and a strategy enabling module, which is configured to determine, according to the strategy selection parameter, a current access control strategy used in access control from the access control strategies stored in the storing module; then the detecting module may be specifically configured to detect the access request, according to the current access control strategy used in access control which is determined by the strategy enabling module, to obtain a detection result.

The apparatus access control strategy may be related to at least one of: access history record data of a communication object corresponding to an access request, and information included in a current access request.

The apparatus may further include: a sending and processing module, which is configured to, in access requests sent from a first source address, when the number of the access requests failing to pass the detection within a predetermined period of time exceeds a predetermined threshold, send the first source address to the gateway to refuse access requests sent from the first source address by the gateway.

The apparatus may further include: an identifier storing module, which is configured to, in access requests whose target address is an address of a first terminal, when the number of the access requests failing to pass the detection within a predetermined period of time exceeds a predetermined threshold, store the address of the first terminal to refuse all access requests whose target address is the address of the first terminal.

It can be seen from the description above that, according to the method and apparatus for preventing the illegal intrusion in the internal network of the smart home, which are provided in the disclosure, the control centre receives an access request forwarded by the gateway; the control centre detects the access request according to pre-stored access control strategies to obtain a detection result; when the detection result is passed, the control centre transmits a control instruction included in the access request to a corresponding terminal through the gateway, otherwise, the control centre refuses the access request; thus preventing a vicious and illegal access and ensuring the security of the internal network of the smart home.

### BRIEF DESCRIPTION OF THE DRAWINGS

Fig. 1 is a flowchart of a method for preventing an illegal intrusion in an internal network of a smart home in an embodiment of the disclosure;
Fig. 2 is a structural diagram of a control centre of an embodiment of the disclosure; and
Fig. 3 is a flowchart of a specific implementation of a method for preventing an illegal intrusion in an internal network of a smart home in an embodiment of the disclosure.

### DETAILED DESCRIPTION

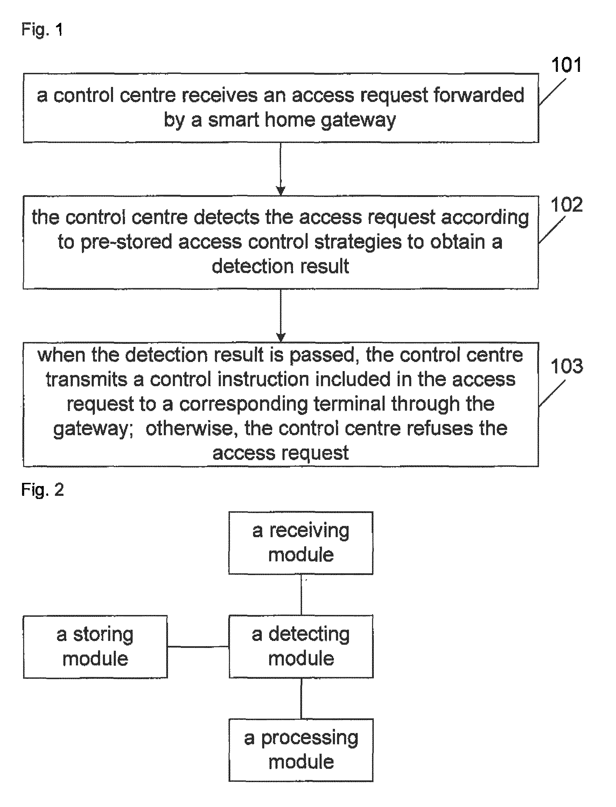

An embodiment of the disclosure provides a method for preventing an illegal intrusion in an internal network of a smart home. As shown in Fig. 1, the method may specifically include the following steps.
Step 101: a control centre receives an access request forwarded by a gateway;
Step 102: the control centre detects the access request according to pre-stored access control strategies to obtain a detection result;
Step 103: when the detection result is passed, the control centre transmits a control instruction included in the access request to a corresponding terminal through the gateway; otherwise, the control centre refuses the access request.

Fig. 2 shows an apparatus for preventing an illegal intrusion in an internal network of a smart home in an embodiment of the disclosure, which includes:
a storing module, which is configured to store access control strategies;
a receiving module, which is configured to receive an access request forwarded by a gateway;
a detecting module, which is configured to detect the access request according to the access control strategies to obtain a detection result; and
a processing module, which is configured to, when the detection result is passed, transmit a control instruction included in the access request to a corresponding terminal through the gateway, otherwise to refuse the access request.

In the present embodiment of the disclosure, access control is performed for the access request by using the access control strategies, thus ensuring that a control instruction included in an illegal access request cannot be sent to a terminal to ensure the terminal safety.

In a specific embodiment of the disclosure, in consideration of the continuous development of services, the ever increasing number of control terminal types and the constant change of user requirements in the future, it is necessary to set a strategy configuring module in the apparatus to configure an access control strategy according to a user requirement.

Correspondingly, the method for preventing an illegal intrusion in an internal network of a smart home in the embodiment of the disclosure should include the following step: obtaining a user requirement and configuring an access control strategy according to the user requirement.

In the specific embodiment of the disclosure, the configuration may specifically refer to:
addition of a new access control strategy;
deletion of an existing access control strategy; and
modification of an existing access control strategy.
Illustrations are given as follows according to examples, respectively.

When a new information Appliance (IA), which is different from other controlled devices, is added to a user home and needs a separate access control strategy, a user may add a new access control strategy via the strategy configuring module. The addition operation may refer to inputting a new access control strategy in an operation interface by the user and storing the inputted access control strategy in the storing module. Of course, the addition operation may also refer to directly downloading a new access control strategy which is stored somewhere else and selected by the user, and storing the downloaded access control strategy in the storing module.

As the intrusion method changes constantly, the user finds that the current access control strategy fails to meet the requirements after a period of time and needs to modify the access control strategy so as to resist a new intrusion method. At this time, the user may call and edit an access control strategy to be modified via the strategy configuring module, and then store the modified access control strategy

For another example, if a device of the user home becomes obsolete and is out of use, then the access control strategy for the device is not available any more, and the user may delete the access control strategy by the strategy configuring module.

Through the strategy configuring module, the user can update an access control strategy at any time so that the access control strategy is no longer fixed, thus greatly improve the apparatus adaptability and expandability.

Of course, for a home network, part of the instructions in external control may be very important, e.g., an alarm starting instruction, an extinguisher starting instruction and the like. Generally, the possibility of wrong judgment for these instructions, though extremely low, may exist by controlling an access request by the access control strategy. However, once misjudged, the alarm starting instruction, the extinguisher starting instruction and the like may cause irrevocable consequences. Therefore, in the apparatus of the specific embodiment of the disclosure, a control instruction list is further stored in the storing module, and the apparatus further includes:
a pre-judging module, which is configured to judge whether the control instruction included in the access request is in the control instruction list to obtain a judgment result; and
a forwarding module, which is configured to, when the judgment result indicates that the control instruction is in the control instruction list, transmit the control instruction included in the access request to a corresponding terminal, otherwise to trigger the detecting module.

Correspondingly, before step 102, the method for preventing an illegal intrusion in an internal network of a smart home of the embodiment of the disclosure further includes the following step:
judging whether the control instruction included in the access request is in a pre-stored control instruction list; if so, transmitting the control instruction included in the access request to a corresponding terminal; otherwise, step 102 is performed.

In the specific embodiment of the disclosure, it has been mentioned above that the user may configure an access control strategy by the strategy configuring module to improve the apparatus adaptability and expandability. However, these methods are not helpful for intelligence of the apparatus. In the specific embodiment of the disclosure, some start judging conditions may be further set so that the apparatus can apply an appropriate access control strategy in appropriate conditions (e.g., time, client required conditions and the like) to improve the efficiency of access control. In such a cause, the apparatus of the specific embodiment of the disclosure may further include:
a parameter obtaining module, which is configured to obtain a strategy selection parameter; and
a strategy enabling module, which is configured to determine, according to the strategy selection parameter, a current access control strategy used in access control from the access control strategies stored in the storing module;
then the detecting module is specifically configured to detect the access request, according to the current access control strategy used in access control which is determined by the strategy enabling module, to obtain a detection result.

Correspondingly, the method for preventing an illegal intrusion in an internal network of a smart home in the embodiment of the disclosure further includes the following step:
obtaining a strategy selection parameter, and
determining, according to the strategy selection parameter, a current access control strategy used in access control from the pre-stored access control strategies;
in step 102, the control centre detects the access request according to the current access control strategy used in access control to obtain a detection result.

The circumstances above are illustrated below according to examples.

For example, some users are not at home only after 10:00AM and before 10:00PM. Therefore, access requests may be initiated only during this period of time, and there will no access requests for the rest of the time. In such a case, access requests initiated after 10:00PM and before 10:00AM may be considered illegal while other access requests initiated at the right time may be legal or illegal. In such a case, the strategy selection parameter is current time. When it is found that the current time is 10:00PM, a first access control strategy (e.g., all access requests are refused) is taken as the current access control strategy used in access control; when it is found that the current time is 10:00AM, a second access control strategy (access requests only sent from legal users can be passed) is selected and taken as the current access control strategy used in access control.

For another example, for a home in which a person lives alone, all access requests are illegal as long as there is someone at home, and access requests may be considered legal or illegal in other cases. In this case, the strategy selection parameter may be use conditions of an electronic device (e.g., whether a television or an air conditioner is turned on). If any electronic device is founded to be in a started state, a first access control strategy (e.g., all access requests are refused) is taken as the current access control strategy used in access control; when it is found that all electronic devices are turned off, a second access control strategy (access requests only sent from legal users can be passed) is selected and taken as the current access control strategy used in access control.

Of course, it should understood that the examples above are only intended to explain that the control centre may intelligently judges whether an access control strategy may be applied and what kind of access control strategy is applied according to the actual value of the strategy selection parameter, and it does not mean that an access control strategy can be selected only using the examples above.

In the specific embodiment of the disclosure, the apparatus further includes:
a sending and processing module, which is configured to send a first source address to the gateway to refuse access requests sent from the first source address by the gateway; as to the access requests sent from the first source address, the number of the access requests failing to pass the detection within a predetermined period of time exceeds a predetermined threshold.

Through setting the sending and processing module above, the burden of the control centre can be reduced and part of the access request control operation ban be performed by the gateway to improve the utilization rate of the gateway. In addition, access requests sent from some illegal addresses are refused by the gateway directly, so that the control centre no longer needs to waste resources senselessly to obtain access requests whose detection results are failing to pass detection inevitably, thus improving the processing efficiency.

In the specific embodiment of the disclosure, the apparatus further includes:
an identifier storing module, which Is configured to, store an address of a first terminal to refuse all access requests whose target address is the address of the first terminal; as to the access requests whose target address is the address of the first terminal, the number of the access requests failing to pass the detection within a predetermined period of time exceeds a predetermined threshold.

Through setting the identifier storing module, the burden of the control centre can be reduced, and the processing efficiency is improved.

In the specific embodiment of the disclosure, the access control strategy can be constructed based on various different factors, several of which are listed as follows:
1: access history record data of a communication object corresponding to an access request;
2: information included in a current access request.

The communication object corresponding to the access request includes at least one of: a transmitter of the access request, and a terminal to be controlled corresponding to the access request.

Of course, it has been explained that the access control strategy of the embodiment of the disclosure can be subjected to configuration operations including addition, modification, deletion and the like according to factors such as user requirements and technical progress etc. Various parameters above only list the methods that may be implemented and it cannot be understood that the access control strategy can only be constructed based on the parameters above.

How to perform access control is illustrated below in details by using the two kinds of information above.

In the specific embodiment of the disclosure, the access history record data of a communication object corresponding to an access request may include at least one of:
A: the number of access requests sent from a requester of an access request within a predetermined period of time;
B: the times a terminal corresponding to an access request is accessed within a predetermined period of time;
C: the times a requester of an access request requests for accessing a terminal corresponding to the access request within a predetermined period of time; and
D: the times a requester of an access request fails to parse the access request within a predetermined period of time.

The illustrations hereinafter are explained by taking the access control strategy related to A, B, C, and D for example. However, it should be understood that, any one of or any combination of A, B C and D may form the access control strategy.

For the access control strategy in the form above, the following parameters are included: parameters involved in a strategy, and an access control threshold.

If the access control strategy is related to the number of access requests sent from a requester of an access request, the following parameters need to be pre-stored: the requester, the threshold of the number of access requests can be sent (e.g., 1000 times), and the number of access requests sent so far.

By using the access control strategy, the control centre judges whether a received current access request is sent from a transmitter which needs to be controlled first; if so, it judges whether the number of access requests which have been sent from the requester currently has exceeded the predetermined number threshold; if yes, it refuses the current access request, otherwise allows the access request.

If the access control strategy is related to the times a terminal corresponding to an access request is accessed within a predetermined period of time, the following parameters need to be pre-stored: the terminal, the threshold of amounts can be accessed (e.g., 1000 times), and the times the terminal is accessed so far.

By using the access control strategy, the control centre firstly judges whether a received current access request accesses the predetermined terminal; if so, it judges whether the times the terminal is accessed so far exceeds the predetermined number threshold; if so, it refuses the access request, otherwise allows the access request.

If the access control strategy is related to the times a requester of an access request requests for accessing a corresponding terminal within a predetermined period of time, the following parameters need to be pre-stored: the terminal, the requester, a number threshold (e.g., 1000 times), and the times the requester have accessed the terminal so far.

By using the access control strategy, the control centre firstly judges whether a received current access request is sent from a predetermined requester to access a predetermined terminal; if yes, it judges whether the times the terminal is accessed by the requester so far exceeds the predetermined number threshold; if yes, it refuses the access request, otherwise allows the access request.

All access times, access request sending times etc. above may be recorded by setting a counter.

It can be understood that information including names, contents, number and the like of the access control strategy information which may be involved in the embodiment of the disclosure is not limited by the access control strategy information listed above. Other access control strategy information put forward by those skilled in the art based on the inspiration of the technical solution provided by the disclosure are in the protection scope of the disclosure.

In the embodiment of the disclosure, for predefined safety strategies, all of them may be implemented and put into effect during specific implementation, or one or more of them may be implemented and put into effect.

For example, in a specific embodiment of the disclosure, an internal network of a smart home implements a source address protocol parse failure strategy separately to prevent an illegal intrusion in the internal network of the smart home.

For another example, in a specific embodiment of the disclosure, an internal network of a smart home implements a source address flow control strategy and a terminal address prevention strategy to prevent an illegal intrusion in the internal network of the smart home.

It has been mentioned above that in the embodiments of the disclosure, access control may be performed according to information included in the current access request, such as authentication information, keys and the like which will be explained in details below in the following embodiment.

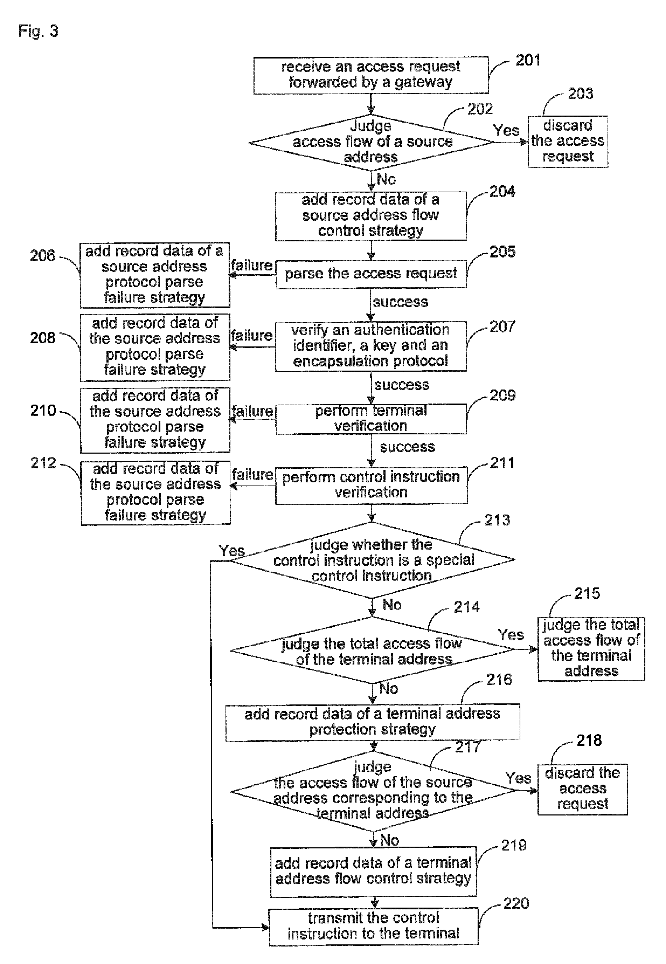

A control centre in an internal network of a smart home will be taken as an implementation main body below to describe a specific embodiment of a method for preventing an illegal intrusion in the internal network of the smart home in an embodiment of the disclosure in combination with Fig. 3, which specifically includes:
Step 201: a control centre receives an access request forwarded by a gateway.
Step 202: when receiving the access request forwarded by the gateway, if a source address flow control strategy corresponding to a source address of the access request is defined, the control centre may, according to history record data recorded by a source address flow control strategy counter corresponding to the source address within a predetermined period of time, judge whether access request flow sent from the source address of the access request is greater than a threshold corresponding to the predefined source address flow control strategy to determine whether to parse the access request.

In the record data, if the access request flow sent from the source address within the predetermined period is greater than the threshold (e.g., 10000 times or 10000 times/60 seconds) corresponding to the predefined source address flow control strategy, the message is not parsed by the control centre, and step 203 is performed. The control centre may refuse the access request and select various operations such as discarding the access request or returning related information to the gateway etc. In the record data, if the access request flow sent from the source address within the predetermined period of time is smaller than the threshold corresponding to the predefined source address flow control strategy, step 204 is performed.
Step 204: the control centre may add a value for the source address flow control strategy counter corresponding to the source address, i.e. self-addition of the history record data of the source address flow control strategy is realized to judge a threshold next time.

In the embodiment of the disclosure, when the value of the counter, i.e. the history record data changes, the control centre may start a process of judging whether a threshold corresponding to safety strategy information is reached, i.e. the data recorded by the changed counter is judged and compared with the threshold corresponding to the predefined safety strategy information.

Taking the source address flow control strategy for example, in the record data, if the access request flow sent from a certain source address fails to reach the threshold corresponding to the source address flow control strategy corresponding to the source address, the control centre will not start a locking protection process. In the record data, if the access request flow sent from a certain source address reaches the threshold corresponding to the source address flow control strategy corresponding to the source address, the control centre will start the locking protection process, determine to refuse receiving any access request sent from the source address subsequently, and send the source address information to the gateway in the internal network of the smart home. The source address is added to a control list (i.e. blacklist) by the gateway, so that the gateway may refuse to receive any access request sent from the source address subsequently.

In another specific embodiment of the disclosure, if the locking protection process started by the control centre for the source address flow control strategy needs to be released, the control centre may perform an unlocking recovery process according to a recovery method corresponding to the predefined source address flow control strategy. Specifically, if the recovery method corresponding to the predefined source address flow control strategy is a manual method, a user may log in to the control centre, manually unlock and recover the source address flow control strategy implemented by the source address, and recover the source address flow control strategy counter corresponding to the source address to an initial value (e.g., 0). If the recovery method corresponding to the predefined source address flow control strategy is an automatic method, the control centre may, when a recovery time corresponding to the predefined source address flow control strategy expires (e.g., 60 seconds), automatically unlock and recover the source address flow control strategy implemented by the source address and recover the source address flow control strategy counter corresponding to the source address to an initial value. Subsequently, the control centre may send the source address information to the gateway, the source address is deleted from the control list by the gateway, and the gateway recovers to receive access requests sent from the source address.

The locking protection process and the unlocking recovery process of the source address protocol parse failure strategy involved in the embodiment of the disclosure, which are similar to the locking protection process and the unlocking recovery process of the source address flow control strategy, may specifically refer to the description above.
Step 205: the control centre parses the access request to obtain key information. step 207 is performed if the parsing is successful; otherwise, step 206 is performed.

In the embodiment of the disclosure, the key information may specifically include: authentication information, terminal information and control instructions etc. The terminal information may specifically include a terminal address accessed by the access request etc.

It should be noted that during the process in which the control centre parses the access request, the control centre may specifically parse an authentication identifier in a message header of the access request to perform authentication verification. The authentication identifier is generated and sent to a gateway by an operating support platform when the gateway is registered to the operating support platform. All message interactions of the gateway and the operating support platform need to verify the authentication identifier. When the authentication identifier in the access request is not matched with the authentication identifier allocated during the registration, the verification fails.

After passing the verification of the authentication identifier, the control centre may perform key authentication for the access request to parse out a message body of the access request. Since the message body of the access request is generally transmitted in the form of an encrypted string whose cipher text is calculated and obtained by an encryption algorithm to ensure safety, the corresponding key is allocated by the operating support platform when the gateway registers to the operating support platform. After the allocation, all messages sent from the operating support platform to the internal network of the smart home are encrypted according to the key. The internal network (may be the control centre or other functional entities, specifically) of the smart home may also decrypt a received access request according to the key correspondingly.

Finally, the control center may verify the message body of the decrypted access request according to a corresponding encapsulation protocol to judge whether the message body meets a related protocol.

The safety strategy information corresponding to the verification process may specifically correspond to the source address protocol parse failure strategy.
Step 206: when the control centre falls to parse the access request, and if the source address protocol parse failure strategy predefined by the control centre is effective, the control centre may add a value for the source address protocol parse failure strategy counter corresponding to the source address, i.e. setf-addition of the history record data of the source address protocol parse failure strategy corresponding to the source address is realized. At the same time, the control centre may refuse the access request and perform various operations such as discarding the access request or returning related information to functions entities (e.g., the gateway) etc.
Step 207: after parsing the access request successfully, the control centre may perform security verification for the authentication identifier, the key and the encapsulation protocol etc. If passing the verification, step 209 is performed; otherwise, step 208 is performed, and the control centre may implement technical operations similar to those in step 206.
Step 209: the control centre may verify whether the terminal (i.e., the terminal address) exists. Because the terminal has a unique terminal address in the internal network of the smart home, if the terminal address included in the key information parsed and obtained by the control centre is not in the internal network of the smart home, step 210 is performed, and the control centre may implement technical operations similar to those in step 206. If the terminal exists, step 211 is performed.
Step 211: the control centre may verify a control instruction. Because a control instruction set corresponding to the terminal is retained in the control centre, if the control instruction included in the key information parsed and obtained by the control centre is not in the control instruction set corresponding to the terminal, the control instruction verification fails, and step 212 is performed. The control centre may implement technical operations similar to those in step 206. If the control instruction exists, the control centre performs step 213.
Step 213: the control centre judges whether the control instruction is a special control instruction of the terminal, i.e. a fire extinguishing instruction etc. If so, step 220 is performed, and the control centre transmits the special control instruction to a corresponding terminal via the gateway, i.e. a smart home device; otherwise, step 214 is performed.

It should be noted that step 205, step 207, step 209 and step 211 are implemented without an order.
Step 214: if a terminal address protection strategy predefined by the control centre is effective, the control centre judges whether the data recorded by a terminal address protection strategy counter corresponding to the terminal address in the history record data in a predetermined period of time is greater than a threshold corresponding to the terminal address protection strategy corresponding to the terminal address; if so, step 215 is performed, and the control centre may perform technical operations which are the same with those in step 203; otherwise, step 216 is performed, and the control centre adds a value for the terminal address protection strategy counter corresponding to the terminal address, i.e. the history record data of the terminal address protection strategy counter is added.

The terminal address protection strategy may specifically refer to a safety strategy based on the total access flow based on the terminal address. The terminal address protection strategy does not need to distinguish the information of the source address which transmits the access request.

In the embodiment of the disclosure, when the counter corresponding to the terminal address protection strategy changes, a process may be triggered similarly for the control centre to judge the changed record data of the counter and a threshold corresponding to a terminal address storage strategy. In addition, similar to the locking protection process and the unlocking recovery process listed above, which are started by the control centre for the source address flow control strategy, the control centre may also start a locking protection process and an unlocking recovery process for the terminal address protection strategy based on the corresponding history record data. What is different is that the terminal address protection strategy (and the terminal address flow control strategy) protects a terminal, while the source address flow control strategy (and the source address protocol parse failure strategy) protects a gateway. In addition, in the embodiment of the disclosure, the control centre may add a terminal address whose access flow reaches a corresponding threshold to the control list based on the terminal address protection strategy, and refuse to transmit all access requests to the terminal address.

Therefore, in step 214, the control centre may further determine whether the access flow of the terminal is greater than the threshold corresponding to the terminal address protection strategy by judging whether the terminal is in the control list.

The terminal address flow control strategy involved in the embodiment of the disclosure is similar to the terminal address protection strategy. What is different is that the terminal address flow control strategy is configured to control the access flow of a certain terminal address by a certain source address.
Step 217: if the terminal address flow control strategy predefined by the control centre is effective, the control centre may judge, in the history record data in the predetermined period of time, whether the access flow of the source address that sends the access request to the terminal address is greater than the threshold corresponding to the predefined terminal address flow control strategy. The control centre may specifically perform the judgment by checking the data recorded by the terminal address flow control strategy counter corresponding to the source address. In another embodiment of the disclosure, the control centre may also determine whether the access flow of the source address to the terminal address is greater than the predefined threshold by checking whether the terminal address is in the control list.

If the access flow of the source address to a certain terminal is greater than the threshold corresponding to the predefined terminal address flow control strategy, step 218 is performed, and the control centre may implement technical operations which are the same with those in step 203; otherwise, step 219 is performed, and the control centre adds a value for the terminal address flow control strategy counter corresponding to the terminal, i.e. the history record data of the terminal address flow control strategy counter is added.

Similarly, the control centre may be triggered to perform threshold judgment and a corresponding locking protection process as well as an unlocking recovery process may be started when the data recorded by the terminal address flow control strategy counter changes, which may specifically refer to the related description of the terminal address protection strategy.

It should be noted that step 214 to step 217 may be implemented without an order.
Step 220: the control centre may transmit the parsed and obtained control instruction to the terminal, i.e. the smart home device by sending a control message.

It can be seen from the embodiment above that in the smart home of the embodiment of the disclosure, when a large number of illegal accesses bypass the operating support platform to access the internal network illegally and deliberately, the control centre is able to identify the illegal accesses to protect the gateway and the terminal devices.

According to the method and apparatus for preventing the illegal intrusion in the internal network of the smart home, which are provided in the disclosure, the control centre receives an access request forwarded by the gateway; the control centre detects the access request according to pre-stored access control strategies to obtain a detection result; when the detection result is passed, the control centre transmits a control instruction included in the access request to a corresponding terminal through the gateway, otherwise, the control centre refuses the access request; thus preventing a vicious and illegal access and ensuring the security of the internal network of the smart home.

The above are only embodiments of the disclosure. It should be noted that for those having ordinary skill in the art, some improvements and retouches may be made without departing from the principles of the disclosure. These improvements and retouches may be regarded as the protection scope of the disclosure.

## Claims

1. A method for preventing an illegal intrusion in an internal network of a smart home, comprising:
receiving, by a control centre, an access request forwarded by a gateway;
detecting, by the control centre, the access request according to pre-stored access control strategies to obtain a detection result; and
when the detection result is passed, transmitting, by the control centre, a control instruction included in the access request to a corresponding terminal through the gateway; otherwise, refusing the access request.

2. The method according to claim 1, further comprising: before receiving an access request forwarded by a gateway,
obtaining, by the control centre, a user requirement and configuring an access control strategy according to the user requirement.

3. The method according to claim 1, further comprising: before detecting the access request,
judging, by the control centre, whether the control instruction included in the access request is in a pre-stored control instruction list; if so, transmitting the control instruction included in the access request to a corresponding terminal; otherwise, performing a step of detecting the access request.

4. The method according to claim 1, further comprising: before detecting the access request according to pre-stored access control strategies,
obtaining, by the control centre, a strategy selection parameter, and determining according to the strategy selection parameter a current access control strategy used in access control from the pre-stored access control strategies;
the detecting the access request specifically comprises: detecting, by the control centre, the access request according to the current access control strategy used in access control to obtain a detection result.

5. The method according to any one of claims 1 to 4, wherein the access control strategy is related to at least one of: access history record data of a communication object corresponding to an access request, and information included in a current access request.

6. The method according to any one of claims 1 to 4, further comprising:
in access requests sent from a first source address, when the number of access requests failing to pass the detection within a predetermined period of time exceeds a predetermined threshold, sending, by the control centre, the first source address to the gateway, and refusing, by the gateway, access requests sent from the first source address.

7. The method according to any one of claims 1 to 4, further comprising:
in access requests whose target address is a target address of a first terminal, when the number of the access requests failing to pass the detection within a predetermined period of time exceeds a predetermined threshold, storing, by the control centre, the address of the first terminal to refuse all access requests whose target address is the address of the first terminal.

8. An apparatus for preventing an illegal intrusion in an internal network of a smart home, comprising:
a storing module, which is configured to store access control strategies;
a receiving module, which is configured to receive an access request forwarded by a gateway;
a detecting module, which is configured to detect the access request according to the access control strategies to obtain a detection result; and
a processing module, which is configured to, when the detection result is passed, transmit a control instruction included in the access request to a corresponding terminal through the gateway, otherwise to refuse the access request.

9. The apparatus according to claim 8, further comprising:
a strategy configuring module, which is configured to configure an access control strategy according to a user requirement.

10. The apparatus according to claim 8, further comprising:
the storing module is further configured to store a control instruction list,
a pre-judging module, which is configured to judge whether the control instruction included in the access request is in the control instruction list to obtain a judgment result; and
a forwarding module, which is configured to, when the judgment result indicates that the control instruction is in the control instruction list, transmit the control instruction included in the access request to a corresponding terminal, otherwise to trigger the detecting module.

11. The apparatus according to claim 8, further comprising:
a parameter obtaining module, which is configured to obtain a strategy selection parameter; and
a strategy enabling module, which is configured to determine, according to the strategy selection parameter, a current access control strategy used in access control from the access control strategies stored in the storing module;
the detecting module is specifically configured to detect the access request, according to the current access control strategy used in access control which is determined by the strategy enabling module, to obtain a detection result.

12. The apparatus according to any one of claims 8 to 11, wherein the access control strategy is related to at least one of: access history record data of a communication object corresponding to an access request, and information included in a current access request.

13. The apparatus according to any one of claims 8 to 11, further comprising:
a sending and processing module, which is configured to, in access requests sent from a first source address, when the number of the access requests failing to pass the detection within a predetermined period of time exceeds a predetermined threshold, send the first source address to the gateway to refuse access requests sent from the first source address by the gateway.

14. The apparatus according to any one of claims 8 to 11, further comprising:
an identifier storing module, which is configured to, in access requests whose target address is an address of a first terminal, when the number of the access requests failing to pass the detection within a predetermined period of time exceeds a predetermined threshold, store the address of the first terminal to refuse all access requests whose target address is the address of the first terminal.
